# EUROPÄISCHE PATENTSCHRIFT

(11) **EP 1 085 638 B1**
(45) Veröffentlichungstag und Bekanntmachung des Hinweises auf die Patenterteilung: **24.11.2004**
(21) Anmeldenummer: 00112847.9
(22) Anmeldetag: 17.06.2000
(51) Int. Cl.: B60K 28/14, B60R 16/04

(54) **Batterie-Trennvorrichtung**
Batterie disconnection device
Disjoncteur de batterie

(30) Priorität: 24.08.1999 DE 19939987
(43) Veröffentlichungstag der Anmeldung: 21.03.2001
(73) Patentinhaber: Ellenberger & Poensgen GmbH, D-90518 Altdorf (DE)
(72) Erfinder: Naumann, Michael, 90537 Feucht (DE); Fischer, Erich, 90518 Altdorf (DE); Weiss, Wolfgang, 90518 Altdorf (DE); Brandl, Wilhelm, 90518 Altdorf (DE)
(74) Vertreter: Tergau & Pohl Patentanwälte

(56) Entgegenhaltungen:
- DE-A- 4 028 242
- DE-C- 4 211 578
- DE-C- 4 234 551

## Beschreibung

Die Erfindung bezieht sich auf eine Vorrichtung zum Trennen der elektrischen Verbindung zwischen der Batterie eines Fahrzeugs und dessen Bordnetz. Unter Fahrzeug wird hierbei insbesondere ein Gefahrgut transportierendes Nutzfahrzeug verstanden.

Eine derartige, z. B. aus der DE 42 11 578 C1 bekannte Trennvorrichtung, die auch als Batterie-Trennschalter bezeichnet wird, ist für Kraftfahrzeuge vorgeschrieben, die Gefahrgut, d. h. insbesondere leicht entzündliche Medien, wie beispielsweise Gas, Treibstoff, Lösungsmittel oder dgl., transportieren. Dabei soll ein derartiger Trennschalter gemäß der entsprechenden europäischen Bestimmung ADR (European agreement concerning the international carriage of dangerous goods by road) zwischen der Fahrzeugbatterie und dem Bordnetz des Fahrzeugs installiert sein. Im Gefahrenfall wird der Trennschalter mittels eines im und/oder außerhalb des Fahrerhaus des Nutzfahrzeuges vorgesehenen Not-Aus-Schalters oder Steuerschalters betätigt. Nach Beseitigung des Gefahrenfalles kann der Trennschalter von diesen Stellen aus wieder eingeschaltet werden. Bei mehreren Steuerschaltern sind diese üblicherweise in Reihe geschaltet.

Die Trennvorrichtung umfasst ein mit dem Trennschalter gekoppeltes, z. B. in Form eines Relais ausgeführtes elektromechanisches Schaltgerät. Dieses wird mittels einer Steuereinrichtung infolge der Betätigung des Steuerschalters angesteuert. Im Gefahrenfall empfängt die Steuerschaltung das Not-Aus-Signal vom Steuerschalter und generiert ein entsprechendes Steuersignal für das Schaltgerät zum Öffnen der über den Trennschalter verbundenen Hauptkontakte. Dadurch wird das Bordnetz von der Fahrzeugbatterie ein- oder zweipolig getrennt. Dabei muss sichergestellt sein, dass einige Verbraucher, wie insbesondere der Tachograph oder Fahrtenschreiber, die Warnblinkanlage sowie gegebenenfalls weitere sicherheitsrelevante Verbraucher des Fahrzeugs, auch bei geöffnetem Trennschalter, d. h. bei getrennten Hauptkontakten weiterhin mit Energie versorgt werden. Die für diese bordnetzunabhängig versorgten Verbraucher oder Betriebsmittel vorgesehenen Stromkreise müssen eigensicher ausgeführt sein. Dies bedeutet, dass in einem derartigen Stromkreis kein Funke und kein thermischer Effekt die Zündung einer bestimmten explosionsfähigen Atmosphäre verursachen kann. Daher sind für diese separaten Verbraucherstromkreise und für den Steuerschalter-Stromkreis üblicherweise sogenannte Sicherheitsbarrieren vorgeschrieben, die in der Regel als Begrenzerschaltungen zur Strom- und/oder Spannungsbegrenzung ausgeführt sind.

In der bisherigen praktischen Anwendung sind das mit dem Trennschalter gekoppelte Schaltgerät in Form eines monostabilen Relais und die Steuereinrichtung oder Steuerelektronik zur Ansteuerung des Schaltgerätes einerseits und die oder jede Begrenzerschaltung zur Strombegrenzung der bordnetzunabhängig versorgten Verbraucher andererseits als Einzelkomponenten ausgeführt. Diese Einzelkomponenten werden dann an verschiedenen Stellen des Nutzfahrzeuges positioniert und über Anschlussleitungen miteinander verbunden. In nachteiliger Weise bedingt die Unterbringung dieser Einzelkomponenten jedoch erhebliche Platzoder Raumprobleme. Ein weiterer Nachteil ist der erhebliche Verdrahtungs- oder Verkabelungsaufwand beim Verbinden dieser Einzelkomponenten untereinander.

Der Erfindung liegt daher die Aufgabe zugrunde, eine unter Vermeidung der genannten Nachteile besonders geeignete Batterie-Trennvorrichtung für ein Fahrzeug, insbesondere für ein Gefahrgut transportierendes Nutzfahrzeug, anzugeben.

Diese Aufgabe wird erfindungsgemäß gelöst durch die Merkmale des Anspruchs 1. Dazu sind sowohl der mit dem Schaltgerät gekoppelte Trennschalter und die Steuereinrichtung als auch die oder jede Begrenzerschaltung für den bzw. jeden bordnetzunabhängig versorgten Verbraucher, insbesondere für einen Tachographen, in einem gemeinsamen Gehäuse angeordnet. Die Begrenzerschaltung für den Steuerschalter, die zweckmäßigerweise schaltungstechnisch Bestandteil der Steuereinrichtung ist, ist ebenfalls in das Gehäuse integriert.

Das Gehäuse weist mindestens eine Einführöffnung für einen gehäuseintern an einen ersten Kontakt oder Hauptkontakt des Trennschalters anschließbare Batterieleitung und für eine gehäuseintern an den zweiten Hauptkontakt des Trennschalters anschließbare Bordnetzleitung auf. Vorzugsweise sind für die von der Batterie zum entsprechenden Hauptkontakt geführte Batterieleitung und für die vom anderen Hauptkontakt des Trennschalters zum Bordnetz weitergeführte Bordnetzleitung jeweils eine separate Einführöffnung vorgesehen. Dadurch ist die Batterie-Trennvorrichtung vorteilhafterweise mit einem gehäuseinternen Hauptkontaktanschluss versehen.

Das Gehäuse umfasst des Weiteren einen gehäuseintern mit der Steuereinrichtung sowie mit der Begrenzerschaltung verbundenen Versorgungsanschluss. Außerdem umfasst das Gehäuse einen gehäuseintern mit dieser Begrenzerschaltung verbundenen Verbraucheranschluss. Ferner weist das Gehäuse einen gehäuseintern über eine weitere Begrenzerschaltung mit der Steuereinrichtung verbundenen Steuerschalteranschluss auf. Der Verbraucheranschluss dient insbesondere zum Verbinden des Tachographen mit dem Ausgang der diesem zugeordneten Begrenzerschaltung. Analog dient der Steuerschaltanschluss zum Verbinden des Steuerschalters oder Not-Aus-Schalters mit dem Ausgang der weiteren Begrenzerschaltung. Der Versorgungsanschluss dient zum Verbinden der Steuereinrichtung und der dem oder jedem bordnetzunabhängig versorgten Verbraucher zugeordneten Begrenzerschaltung mit der Fahrzeugbatterie.

Zwar ist bereits ein von der ETA Elektrotechnische Apparate GmbH und damit von der Anmelderin unter der Produktbezeichnung E-1032-... vertriebener Batterie-Trennschalter bekannt geworden, bei dem das Schaltgerät und die diesem zugeordnete Steuereinrichtung in einem Gehäuse untergebracht sind. Bei diesem Gerät sind jedoch die Hauptkontakte des Trennschalters aus dem Gehäuse herausgeführt, so dass der Anschluss der Batterieleitung einerseits sowie der Bordnetzleitung andererseits außerhalb des Gehäuses erfolgt. Die eingangs geschilderten Nachteile konnten mit diesem Batterie-Trennschalter somit nicht zufriedenstellend beseitigt werden, zumal nach wie vor die oder jede Begrenzerschaltung für die bordnetzunabhängig versorgten Verbraucher als Einzelkomponente separat untergebracht und mit der weiteren Einzelkomponente, nämlich dem Batterie-Trennschalter über eine externe Verkabelung verbunden werden musste.

In zweckmäßiger Ausgestaltung weist das Gehäuse mindestens ein manschettenartiges Dichtelement auf, das im Bereich der Einführöffnung mit dem Gehäuse lösbar verbunden ist. Das Dichtelement weist freiendseitig eine Einstecköffnung mit an die Batterieleitung und/oder die Bordnetzleitung angepasstem Innendurchmesser auf. Vorzugsweise sind zwei derartige Dichtelemente, zweckmäßigerweise an gegenüberliegenden Seiten des Gehäuses, vorgesehen. Dabei ist das eine Dichtelement zur Abdichtung des in das Gehäuse eingeführten Anschlusskontaktes der Batterieleitung und das andere Dichtelement analog zur Abdichtung des in ebenfalls in das Gehäuse eingeführten Anschlusskontaktes der Bordnetzleitung vorgesehen.

Durch die lösbare Verbindung des oder jedes Dichtelements mit dem Gehäuse ist auch eine nachträgliche Montage der Batterie-Trennvorrichtung am Fahrzeug in einfacher Weise möglich, indem zunächst die Anschlusskontakte der Batterieleitung und der Bordnetzleitung durch die Dichtelemente hindurch geführt und erst anschließend diese in entsprechende Aussparungen des Gehäuses eingesetzt werden. Dazu sind in einem Gehäuseunterteil des zweckmäßigerweise zweiteiligen Gehäuses zu einem Gehäuseoberteil hin offene Aussparungen zur Aufnahme der Dichtelemente vorgesehen. Das als Deckel dienende Gehäuseoberteil, das beispielsweise L-förmig ausgeführt ist, bildet dann im Bereich der oder jeder Aussparung mindestens eine Haltekante für das Dichtelement.

Die mit der Erfindung erzielten Vorteile bestehen insbesondere darin, dass durch Integration aller bei einem derartigen Batterie-Trennschalter vorgesehenen Einzelkomponenten, nämlich des mit dem Trennschalter gekoppelten Schaltgerätes und der dieses ansteuernden Steuereinrichtung sowie der oder jeder Begrenzerschaltung für bordnetzunabhängig versorgte Verbraucher in ein gemeinsames Gehäuse lediglich eine alle erforderlichen Funktionen enthaltende Komponente bereitgestellt ist. Diese somit eine hohe Funktionalität aufweisende Komponente ist besonders kompakt und kann daher im Bereich des an einem derartigen Nutzfahrzeug üblicherweise vorgesehenen Batteriekastens montiert werden, so dass im Batteriekasten Raum zur Aufnahme mindestens einer weiteren Fahrzeugbatterie geschaffen ist. Die alle erforderlichen Funktionen in einem einzelnen Gehäuse aufweisende Batterie-Trennvorrichtung ist somit besonders bedien- und montagefreundlich, da die erforderlichen Anschlüsse des Steuerschalters und des oder jedes bordnetzunabhängig zu versorgenden Verbrauchers sowie der Eigenenergieversorgung durch einfache elektrische Steckverbindungen am Gehäuse realisierbar sind.

Nachfolgend wird ein Ausführungsbeispiel der Erfindung anhand einer Zeichnung näher erläutert. Darin zeigen:
- Fig. 1: in einer Explosionsdarstellung eine Batterie-Trennvorrichtung mit einem deren Komponenten aufnehmenden Gehäuse,
- Fig. 2: in perspektivischer Darstellung das Gehäuse gemäß Fig. 1 in geschlossenem Zustand, und
- Fig. 3: ein Blockschaltbild der in das Gehäuse integrierten Funktionsbausteine der Batterie-Trennvorrichtung.

Einander entsprechende Teile sind in allen Figuren mit den gleichen Bezugszeichen versehen.

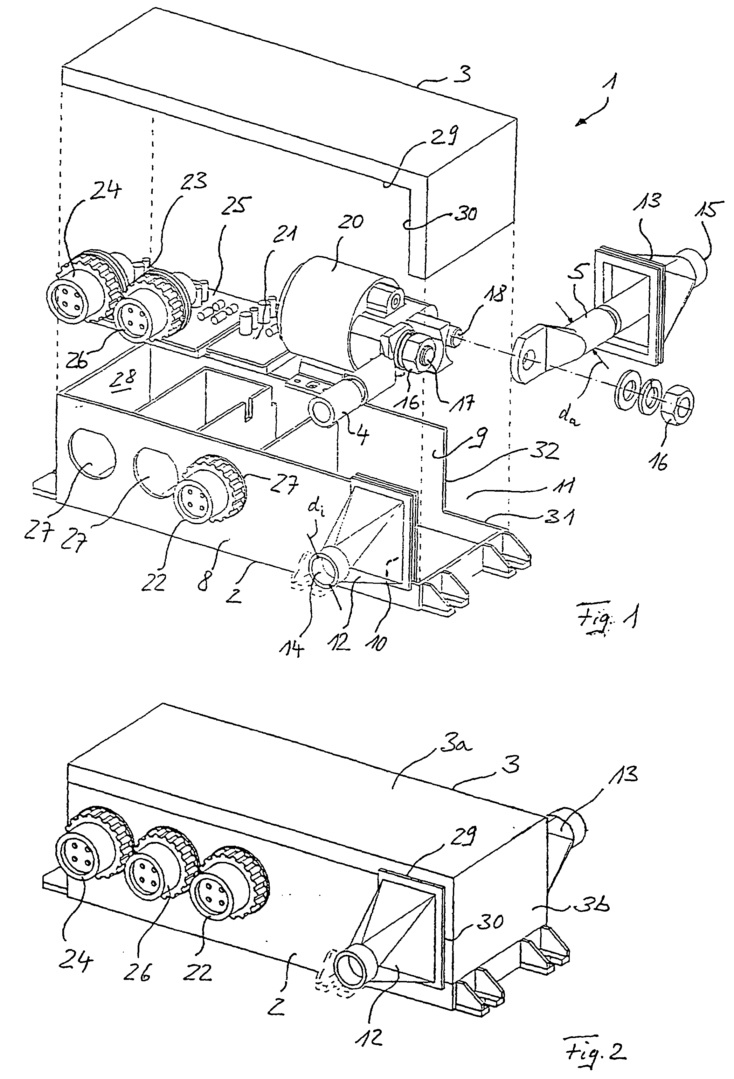

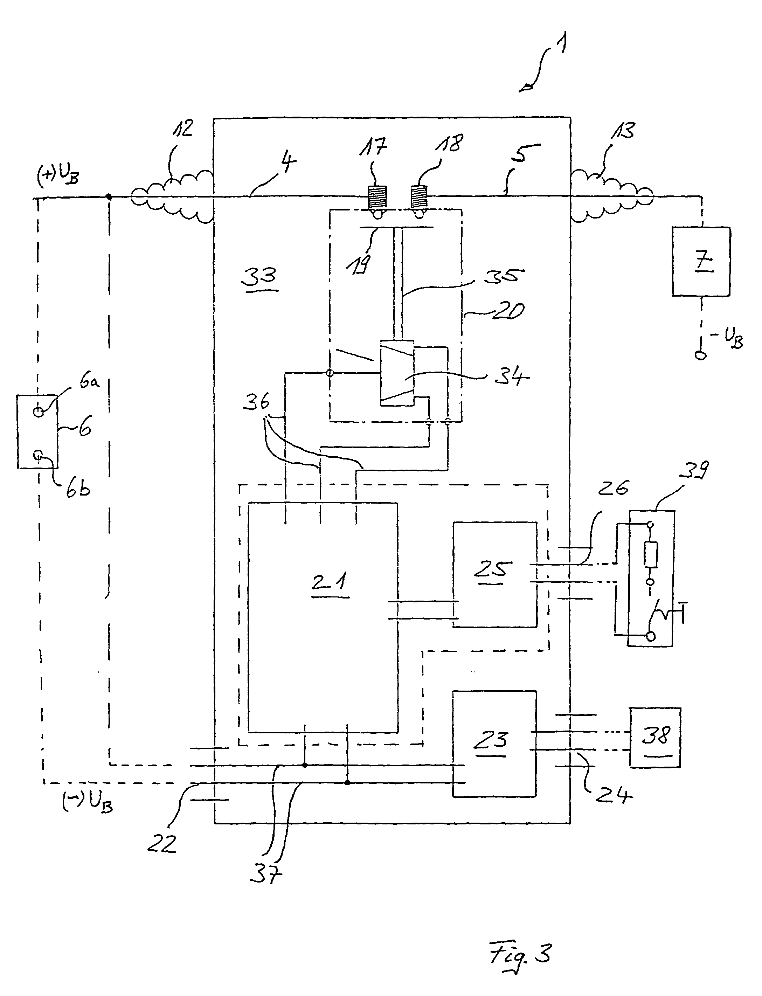

Fig. 1 zeigt die Trennvorrichtung 1 mit einem ein Gehäuseunterteil 2 und ein Gehäuseoberteil 3 aufweisenden Gehäuse zur Aufnahme aller elektrischen oder elektronischen und elektromechanischen Komponenten für eine steuerbare Trennfunktion einer elektrischen Verbindung, von der lediglich Kontaktanschlüsse 4 und 5 dargestellt sind. Diese Kontaktanschlüsse 4,5 sind Teil der elektrischen Verbindung zwischen einer Batterie 6 eines (nicht dargestellten) Kraftfahrzeuges, insbesondere eines Gefahrgut transportierenden Nutzfahrzeuges, und dessen Bordnetz 7 (Fig. 3).

Das Gehäuseunterteil 2 weist an gegenüberliegenden Längsseiten 8,9 jeweils eine Aussparung 10,11 auf, die einerseits als Einführöffnungen für die Kontaktanschlüsse 4,5 und andererseits zur Aufnahme von Dichtelementen 12 bzw. 13 dienen. Die Dichtelemente 12,13 können faltenbalgartig, pyramiden- oder kegelförmig ausgeführt sein. Die somit nach Art von starren oder flexiblen Manschetten ausgeführten Dichtelement 12,13 weisen freiendseitig eine im Querschnitt runde Durchstecköffnung 14 bzw. 15 auf, deren Innendurchmesser dᵢ an den Außendurchmesser dₐ des jeweiligen, durch dieses Dichtelement 14,15 hindurchgeführten Kontaktanschlusses 5 bzw. 4 angepasst ist. Die durch die Dichtelemente 12 und 13 hindurchgeführten Kontaktanschlüsse 5,4 werden mittels Schraubenmuttern 16 mit Hauptkontakten 17 bzw. 18 eines Trennschalters 19 (Fig. 3) verbunden, der mit einem elektromechanischen Schaltgerät 20 in Form eines Relais gekoppelt und im Ausführungsbeispiel in dieses integriert ist.

Dem Schaltgerät 20 ist eine elektronische Steuereinrichtung 21 zugeordnet. Dieser mit dem Schaltgerät 20 eine Funktionseinheit bildende Steuereinrichtung 21 ist eine Anschlussbuchse 22 zugeordnet, die im Ausführungsbeispiel an der Gehäuselängsseite 8 des Gehäuseunterteils 2 angeordnet und dort befestigt ist. Die Anschlussbuchse 22 bildet einen mindestens zweipoligen Versorgungsanschluss für die Steuereinrichtung 21.

Als weiteres Funktionselement ist in das Gehäuse 2,3 eine erste Begrenzerschaltung 23 integriert, der eine als wiederum mindestens zweipoliger Verbraucheranschluss dienende Anschlussbuchse 24 zugeordnet ist. Ferner ist als Funktionselement eine weitere Begrenzerschaltung 25 in das Gehäuse 2,3 integriert, der eine als Steuerschalteranschluss dienende weitere zweipolige Anschlussbuchse 26 zugeordnet ist.

Wie aus Fig. 1 ersichtlich ist, sind die Anschlussbuchsen 22,24 und 26 über entsprechende Durchgangsöffnungen 27 teilweise in das Gehäuseinnere geführt und dort mit der Steuereinrichtung 21 und mit den Begrenzerschaltungen 23 bzw. 25 elektrisch verbunden. Im Ausführungsbeispiel gemäß Fig. 1 sind die drei Anschlussbuchsen 22,24 und 26 an der Gehäuselängsseite 8 des Gehäuseunterteils 2 nebeneinander angeordnet. Die oder jede Anschlussbuchse 22,24,26 kann jedoch auch an der gegenüberliegenden Gehäuselängsseite 9 oder an einer Gehäusestirnseite 28 angebracht sein.

Zum staub- und wasserdichten Verschließen des Gehäuses wird dessen Gehäuseoberteil oder Gehäusedeckel 3 auf das Gehäuseunterteil 2 aufgesetzt und mit diesem in nicht näher dargestellter Art und Weise lösbar verbunden, beispielsweise verschraubt oder verklipst. Den zusammengebauten Zustand des die Schutzart IP65 nach der Vorschrift IEC 60529 erfüllenden und vorzugsweise aus Kunststoff bestehenden Gehäuses 2,3 zeigt Fig. 2. Daraus ist auch vergleichsweise deutlich ersichtlich, dass der im Ausführungsbeispiel L-förmige Gehäusedeckel 3 mit dessen Längsseite 3a eine erste Haltekante 29 und mit dessen Stirnseite 3b eine zweite Haltekante 30 für das jeweilige Dichtelement 12,13 bildet. Zwei weitere Haltekanten 31 und 32 für die im Ausführungsbeispiel im Verbindungsbereich rechteckig oder quadratisch ausgeführten Dichtelemente 12,13 sind durch die entsprechenden Ausnehmungen 10 bzw. 11 am Gehäuseunterteil 2 gebildet.

Fig. 3 zeigt die in das Gehäuse 2,3 integrierten Funktionselemente der Batterie-Trennvorrichtung 1 in einem Blockschaltbild. Die über die Dichtelemente 12 und 13 in den Gehäuseinnenraum 33 geführten Kontaktanschlüsse 4,5 sind gehäuseintern mit den Hauptkontakten 17 bzw. 18 des Trennschalters 19 elektrisch leitend verbunden. Das Schaltgerät 20 weist einen mit zwei Relaisspulen ausgeführten Elektromagneten 34 auf, der über ein mechanisches Koppelelement 35 mit dem Trennschalter 19 gekoppelt ist. Das Schaltgerät 20 ist somit über drei Anschluss- oder Verbindungsleitungen 36 mit der elektronischen Steuereinrichtung 21 verbunden.

Die Steuereinrichtung 21 ist gehäuseintern über Anschlussleitungen 37 einerseits mit der als Versorgungsanschluss dienenden Anschlussbuchse 22 und andererseits mit der Begrenzerschaltung 23 für die bordnetzunabhängig versorgten Verbraucher verbunden. Diese Begrenzerschaltung 23 ist ausgangsseitig mit der als Versorgungsanschluss dienenden Anschlussbuchse 24 ebenfalls gehäuseintern verbunden. An diese Anschlussbuchse, d. h. an diesen Verbraucheranschluss 24 wird ein üblicherweise im Nutzfahrzeug vorgesehener Tachograph oder Fahrtenschreiber 38 angeschlossen. Die Steuereinrichtung 21 ist des Weiteren gehäuseintern mit der weiteren Begrenzerschaltung 25 verbunden, die ihrerseits ausgangsseitig wiederum gehäuseintern mit der als Steuerschalteranschluss dienenden Anschlussbuchse 26 kontaktiert ist. An diese Anschlussbuchse, d. h. an diesen Steuerschalteranschluss 26 wird der üblicherweise im Führerhaus des Nutzfahrzeugs vorgesehene Steuerschalter oder Not-Aus-Schalter 39 angeschlossen.

An die als Versorgungsanschluss dienende Anschlussbuchse 22 werden der Pluspol 6a und der Minuspol 6b der Fahrzeugbatterie 6 angeschlossen. Da dieser Anschluss direkt an die Fahrzeugbatterie 6 erfolgt, ist auch bei einer Trennung des Bordnetzes 7 von der Batterie 6 infolge einer den Trennschalter 19 öffnenden Not-Auslösung eine Energieversorgung der Begrenzerschaltung 23 und der Steuerelektronik 21 sichergestellt. Außerdem ist sichergestellt, dass über die Steuereinrichtung 21 und die weitere Begrenzerschaltung 25 ein Stromfluß über den Steuerschalter 39 möglich ist. Dadurch ist gewährleistet, dass auch bei geöffnetem Trennschalter 19 infolge einer Betätigung des Steuerschalters 39 ein entsprechendes Steuersignal zum Schließen des Trennschalters 19 von der Steuereinrichtung 21 erzeugt werden kann.

Die Begrenzerschaltungen 23 und 25 sind als sogenannte Sicherheitsbarrieren ausgeführt mit dem Zweck, dass der über den Tachographen 38 bzw. über den Steuerschalter 39 geschlossene Stromkreis eigensicher ist. Dabei wird die jeweils eingespeiste Leistung derart begrenzt, dass weder durch Funken noch durch thermische Effekte eine Zündung eines sich ggf. im Bereich der Batterie-Trennvorrichtung befindenden zündfähigen Gemisches erfolgen kann. Dadurch ist ein Explosionsschutz gegeben.

Die an sich bekannten und daher nicht näher beschriebenen Sicherheitsbarrieren weisen Elemente zur Strombegrenzung sowie Elemente zur Spannungsbegrenzung auf. Diese sind beispielsweise realisiert durch mindestens eine zwischen den Versorgungsleitungen und damit parallel im Stromkreis liegende Zenerdiode zur Spannungsbegrenzung und durch einen im Strompfad liegenden Reihenwiderstand zur Strombegrenzung. Des Weiteren kann eine Sicherung zum Schutz der Zenerdiode vorgesehen sein. Die sogenannte Zener-Sicherheitsbarriere weist zu Zwecken der Redundanz üblicherweise mehrere, z. B. zwei einander parallelgeschaltete Zenerdioden auf.

Die Steuereinrichtung 21 ist in nicht näher dargestellter Art und Weise zweckmäßigerweise durch einen Mikrokontroller oder Mikroprozessor realisiert, der aus einem mittels des Steuerschalters 39 erzeugten Schaltbefehl ein entsprechendes Steuersignal für das Schaltgerät 20 generiert. Je nach Schaltbefehl des Steuerschalters 39 wird dann mittels des Schaltgerätes 20 der Trennschalter 19 geöffnet oder geschlossen. Die dem Steuerschalter 39 zugeordnete Begrenzerschaltung 25 ist dabei vorzugsweise schaltungstechnisch in die elektronische Steuereinrichtung 21 integriert.

### Bezugszeichenliste

- 1: Batterie-Trennvorrichtung
- 2: Gehäuseunterteil
- 3: Gehäuseoberteil
- 3a: Längsseite
- 3b: Stirnseite
- 4,5: Kontaktanschluss
- 6: Batterie
- 6a: Pulspol
- 6b: Minuspol
- 7: Bordnetz
- 8,9: Längsseite
- 10,11: Aussparung
- 12,13: Dichtelement
- 14,15: Durchstecköffnung
- 16: Schraubenmutter
- 17,18: Hauptkontakt
- 19: Trennschalter
- 20: Schaltgerät
- 21: Steuereinrichtung
- 22: Anschlussbuchse / Versorgungsanschluss
- 23: Begrenzerschaltung
- 24: Anschlussbuchse / Verbraucheranschluss
- 25: Begrenzerschaltung
- 26: Anschlussbuchse / Steuerschalteranschluss
- 27: Durchgangsöffnung
- 28: Gehäusestirnseite
- 29-32: Haltekante
- 33: Gehäuseinnenraum
- 34: Elektromagnet
- 35: Koppelelement
- 36,37: Anschlussleitung
- 38: Tachograph / Fahrtenschreiber
- 39: Steuer- / Not-Aus-Schalter

- dᵢ: Innendurchmesser
- dₐ: Außendurchmesser

## Patentansprüche

1. Vorrichtung zum Trennen der elektrischen Verbindung (4,5) zwischen der Batterie (6) eines Fahrzeugs, insbesondere eines Gefahrgut transportierenden Nutzfahrzeugs, und dessen Bordnetz (7), mit einem einen Trennschalter (19) betätigenden Schaltgerät (20) und mit einer Steuereinrichtung (21) zur Ansteuerung des Schaltgerätes (20) infolge der Betätigung eines Steuerschalters (39) sowie mit einer Begrenzerschaltung (23) zur Strombegrenzung eines bordnetzunabhängig versorgten Verbrauchers (38), insbesondere eines Tachographen, wobei der mit dem Schaltgerät (20) gekoppelte Trennschalter (19) und die Steuereinrichtung (21) in ein gemeinsames Gehäuse (2,3) integriert sind, **dadurch gekennzeichnet, daß** auch die Begrenzerschaltung (23) in das Gehäuse (2, 3) integriert ist und daß das Gehäuse
- mindestens eine Einführöffnung (10,11) für eine gehäuseintern an einen ersten Kontakt (17) des Trennschalters (19) anschließbare Batterieleitung (4) und für eine gehäuseintern an einen zweiten Kontakt (18) des Trennschalters (19) anschließbare Bordnetzleitung (5),
- einen gehäuseintern mit der Steuereinrichtung (21) sowie mit der Begrenzerschaltung (23) verbundenen Versorgungsanschluss (22),
- einen gehäuseintern mit dieser Begrenzerschaltung (23) verbundenen Verbraucheranschluss (24), und
- einen gehäuseintern über eine weitere Begrenzerschaltung (25) mit der Steuereinrichtung (21) verbundenen Steuerschalteranschluss (26) aufweist.

2. Vorrichtung nach Anspruch 1,
**gekennzeichnet durch**
mindestens ein mit dem Gehäuse (2,3) im Bereich der Einführöffnung (10,11) lösbar verbundenes manschettenartiges Dichtelemente (12,13), **durch** das die Batterieleitung (4) und/oder die Bordnetzleitung (5) in den Gehäuseinnenraum (33) geführt sind.

3. Vorrichtung nach Anspruch 1 oder 2,
**dadurch gekennzeichnet,**
**dass** das Gehäuse ein schalenartiges Unterteil (2) und ein Gehäuseoberteil (3) aufweist, wobei das Unterteil (2) zwei an gegenüberliegenden Gehäuseseiten (8,9) vorgesehene Aussparungen (10,11) aufweist, in die jeweils ein Dichtelement (12,13) eingesetzt ist, und dass das Gehäuseoberteil (3) im Bereich jeder Aussparung (10,11) mindestens eine Haltekante (29,30) für das Dichtelement (12,13) bildet.

## Claims

1. Apparatus for disconnection of the electrical connection (4, 5) between the battery (6) of a vehicle, in particular of a commercial vehicle for transporting hazardous goods, and its vehicle power supply system (7), having a switching device (20) which operates an isolating switch (19), and having a control device (21) for driving the switching device (20) as a consequence of the operation of a control switch (39), and having a limiter circuit (23) for limiting the current to a load (38) which is supplied independently of the vehicle power supply system, in particular a tachograph, with the isolating switch (19) that is coupled to the switching device (20) and the control device (21) being integrated in a common housing (2, 3), **characterized in that** the limiter circuit (23) is also integrated in the housing (2, 3), and **in that** the housing has
- at least one insertion opening (10, 11) for a battery cable (4), which can be connected within the housing to a first contact (17) of the isolating switch (19), and for a vehicle power supply system cable (5), which can be connected within the housing to a second contact (18) of the isolating switch (19),
- a supply connection (22) which is connected within the housing to the control device (21) and to the limiter circuit (23),
- a load connection (24) which is connected within the housing to this limiter circuit (23), and
- a control switch connection (26) which is connected within the housing to the control device (21) via a further limiter circuit (25).

2. Apparatus according to Claim 1,
**characterized by**
at least one collar-like sealing element (12, 13), which is detachably connected to the housing (2, 3) in the area of the insertion opening (10, 11) and through which the battery cable (4) and/or the vehicle power supply cable (5) are/is passed into the housing interior (33).

3. Apparatus according to Claim 1 or 2,
**characterized**
**in that** the housing has a shell-like lower part (2) and a housing upper part (3), with the lower part (2) having two cutouts (10, 11) which are provided on opposite housing faces (8, 9) and into which a respective sealing element (12, 13) is inserted, and in that the housing upper part (3) forms at least one holding edge (29, 30) for the sealing element (12, 13) in the area of the respective cutout (10, 11).

## Revendications

1. Dispositif en vue de la déconnexion d'une liaison électrique (4, 5) entre une batterie d'un véhicule, en particulier un véhicule utilitaire transportant des matières dangereuses, et son réseau embarqué (7), équipé d'un commutateur (20) actionnant un disjoncteur (19) et d'un dispositif de commande (21) en vue de la commande du commutateur (20) à la suite de l'actionnement d'un commutateur de commande (39) ainsi que d'un limiteur (23) en vue de la limitation de courant d'un dissipateur (38) alimenté indépendamment du réseau embarqué, en particulier un tachygraphe, dans lequel le disjoncteur (19) couplé au commutateur (20) et le dispositif de commande (21) sont incorporés dans un boîtier commun (2, 3), **caractérisé en ce que**, également le limiteur est incorporé dans le boîtier (2, 3) et que le boîtier présente
- au moins un orifice d'entrée (10, 11) pour une borne de batterie (4) reliée à l'intérieur du boîtier à un premier contact (17) du disjoncteur et pour une borne de réseau embarqué (5) reliée à l'intérieur du boîtier à un second contact (18) du disjoncteur (19),
- une borne d'alimentation (22) reliée à l'intérieur du boîtier au dispositif de commande (21) ainsi qu'au limiteur (23),
- une borne de dissipateur (24) reliée à l'intérieur du boîtier à ce limiteur (23), et
- une borne de commutateur de commande (26) relié à l'intérieur du boîtier par l'intermédiaire d'un autre limiteur (25) au dispositif de commande (21).

2. Dispositif selon la revendication 1, **caractérisé par** au moins un élément étanche (12, 13) sous forme de manchon relié de façon amovible dans la zone de l'orifice d'entrée (10, 11) avec le boîtier (2, 3), à travers lequel la borne de batterie (4) et/ou la borne de réseau embarqué (5) sont dirigées dans l'intérieur du boîtier (33).

3. Dispositif selon la revendication 1 ou 2, **caractérisé en ce que** le boîtier présente une partie inférieure (2) en forme de coque et une partie supérieure de boîtier (3), dans lequel la partie inférieure (2) présente deux évidements (8, 9) prévus sur les côtés du boîtier en vis-à-vis, dans lesquels un élément étanche (12, 13) est inséré respectivement, et **en ce que** la partie supérieure du boîtier (3) forme, dans la zone de chaque évidement (10, 11), au moins un bord d'arrêt (29, 30) pour l'élément étanche (12, 13).
